# FASCICULE DE BREVET EUROPEEN

(11) **EP 2 671 295 B1**
(45) Date de publication et mention de la délivrance du brevet: **29.04.2015**
(21) Numéro de dépôt: 12707830.1
(22) Date de dépôt: 31.01.2012
(51) Int. Cl.: H02G 3/04, H02G 3/06

(54) **ECLISSE DE RACCORDEMENT POUR TRONCONS DE CHEMIN DE CABLES EN FILS**
VERBINDUNGSGLIED FÜR LANGE DRAHTKABELTRASSEN
CONNECTING LINK FOR LENGTHS OF WIRE CABLE TRAY

(30) Priorité: 31.01.2011 FR 1100279
(43) Date de publication de la demande: 11.12.2013
(73) Titulaire: Legrand France, 87000 Limoges (FR); Legrand SNC, 87000 Limoges (FR)
(72) Inventeur: ADAM, Damien, F-72240 Domfront En Champagne (FR); DECORE, Raphaël, F-72140 Sille Le Guillaume (FR); BELLANGER, Jérôme, F-72650 Saint Saturnin (FR)
(74) Mandataire: Santarelli
(86) Numéro de dépôt international: PCT/FR2012/050208
(87) Numéro de publication internationale: WO 2012/104545

(56) Documents cités:
- EP-A1- 0 556 137
- FR-A1- 2 857 792

## Description

La présente invention concerne une éclisse de raccordement pour tronçons de chemin de câbles en fils.

Le domaine de la présente invention est l'éclissage de tronçons de chemin de câbles en fils. On utilise de tels tronçons pour réaliser un chemin de câbles assurant le soutien, le logement et la protection d'éléments longilignes, généralement souples, tels des câbles électriques mais également des tubes, par exemple des tubes de liaison pneumatique ou hydraulique, des fibres optiques, .... Dans la suite de la présente description, dans un souci de simplification et de clarté, il sera question uniquement de câbles électriques. Il ne s'agira alors nullement d'une limitation de l'utilisation desdits chemins de câbles.

Un chemin de câbles en fils présente généralement une forme allongée et une section en U. Il comporte des fils longitudinaux, appelés fils de chaîne, et des fils transversaux, appelés fils de trame. Les fils de chaîne sont le plus souvent des fils rectilignes tandis que les fils de trame présentent une forme en U. Tous ces fils sont soudés les uns aux autres de manière à être régulièrement espacés. On réalise de la sorte un chemin de câbles en fils, présentant une structure en treillis, qui comporte un fond destiné à servir de support aux câbles électriques et des parois latérales, ou ailes, destinées à maintenir lesdits câbles sur le fond en formant une goulotte.

Un chemin de câbles est le plus souvent constitué de plusieurs tronçons de chemins de câbles assemblés bout à bout, ou faisant un angle entre eux, ou bien encore réalisant une dérivation en T, en X, en Y ou autre. Pour raccorder alors de tels tronçons, il est connu d'utiliser des dispositifs de raccordement appelés communément éclisses, comme dans le document FR-2857792.

De nombreux types d'éclisses existent et seuls certains types d'entre elles seront évoqués ici. On peut ainsi par exemple ici citer les éclisses telles celles révélées par le document EP-1 360 749. Ces éclisses sont destinées à être montées sur les ailes latérales d'un chemin de câbles en fils. Elles ne sont pas adaptées pour être utilisées au niveau du fond d'un chemin de câbles. Cependant, comme le sait l'homme du métier, pour des chemins de câbles supportant une charge lourde, il est nécessaire de prévoir également un éclissage au niveau du fond du chemin de câbles entre deux tronçons voisins. Il est prévu également dans ce document de pré-équiper un tronçon de chemin de câbles avec des éclisses divulguées dans ce document. L'opération d'éclissage est alors simplifiée.

Le document WO-2009/007020 ne concerne pas une éclisse mais des tronçons de chemin de câbles pouvant être raccordés sans faire appel à des éclisses. De tels tronçons de chemin de câbles sont configurés à une de leur extrémité de manière à présenter un logement, d'une seule pièce avec ledit tronçon de chemin de câbles, ledit logement étant destiné à accueillir un fil de trame d'extrémité d'un tronçon de chemin de câbles similaire.

A l'usage, on remarque que de tels tronçons de chemin de câbles sont surtout prévus pour réaliser l'éclissage de deux tronçons similaires. Toutefois, dès qu'il est nécessaire de raccourcir un tronçon de chemin de câbles, il convient de prévoir des éclisses « classiques » pour assurer une liaison au niveau de la découpe réalisée. Deux techniques d'éclissages doivent donc être prévues pour la réalisation d'un chemin de câbles mettant en oeuvre plusieurs tronçons de chemin de câbles tels que décrits dans ce document de l'art antérieur WO-020.

La présente invention a pour but de résoudre un problème technique original. Il s'agit en effet de fournir une éclisse qui puisse être prémontée de manière démontable sur un tronçon de chemin de câbles en fils, de telle sorte que cette éclisse, disposée en bout d'un tronçon de chemin de câbles, soit prête à accueillir un autre tronçon de manière à assurer leur éclissage tout en pouvant être démontée et réutilisée dans le cas où un tronçon de chemin de câbles doit être découpé pour adapter la longueur du chemin de câbles correspondant.

Avantageusement, une éclisse selon la présente invention permettra de réaliser un éclissage avec de bonnes performances mécaniques. Elle s'intégrera également dans le chemin de câbles de préférence de manière à ne pas former un obstacle agressif pour les câbles électriques destinés à prendre place à l'intérieur du chemin de câbles.

À cet effet, la présente invention propose une éclisse de raccordement pour tronçons de chemin de câbles en fils, ledit chemin de câbles en fils comportant, d'une part, des fils de chaîne longitudinaux et, d'autre part, des fils de trame transversaux de manière à définir une goulotte présentant un fond délimité par deux parois latérales.

Selon la présente invention, ladite éclisse comporte une première branche s'étendant selon une première direction transversale supposée horizontale ainsi qu'une seconde branche s'étendant selon une seconde direction transversale sensiblement perpendiculaire à la première direction transversale, la seconde branche étant donc supposée sensiblement verticale et disposée au-dessus de la première branche, et
- la première branche présente :
   des moyens d'appui, destinés à venir coopérer avec au moins un fil de chaîne de chaque tronçon de chemin de câbles, et
   au moins deux butées latérales,
- la seconde branche présente :
   des moyens d'appui, destinés à venir coopérer avec au moins un fil de chaîne de chaque tronçon de chemin de câbles,
   au moins deux butées latérales, et
   au moins un bossage s'étendant sensiblement horizontalement,
   des moyens d'écartement longitudinaux, disposés entre les butées latérales, permettant de séparer deux fils de trame d'extrémité étant prévus sur au moins l'une des branches, et les deux branches étant reliées l'une à l'autre par une zone charnière élastique d'axe sensiblement longitudinal.

Une telle éclisse peut ainsi venir prendre appui entre deux fils de chaîne d'un chemin de câbles avec, d'une part, les moyens d'appui de la première branche et, d'autre part, les moyens d'appui de la seconde branche. L'élasticité entre les deux branches et le bossage (qui peut être un point dur, une saillie, ou tout autre type d'obstacle, quelle que soit sa forme) permet de réaliser l'encliquetage de l'éclisse sur le chemin de câbles tout en assurant aussi le maintien de l'éclisse sur ce chemin de câbles. L'éclisse permet également un prémontage sur une extrémité d'un tronçon de chemin de câbles. Il faut entendre par le fait que les moyens d'écartement longitudinaux se trouvent entre les butées latérales non pas qu'on a à chaque fois entre deux butées un moyen d'écartement mais que les butées latérales sont décalées longitudinalement par rapport aux moyens d'écartement et que l'on trouve des butées latérales de part et d'autre d'un plan transversal contenant les moyens d'écartement longitudinaux.

Selon une forme de réalisation préférée pour des chemins de câbles dont la largeur n'est pas trop importante, les moyens d'appui de la première branche comportent une troisième branche symétrique à la seconde branche de telle sorte que l'éclisse présente une forme générale en U, le fond du U étant formé par la première branche de l'éclisse et les branches du U étant formées par la seconde branche et par la troisième branche de l'éclisse.

Une éclisse de raccordement selon la présente invention peut être par exemple réalisée par découpe et pliage d'une tôle. Dans un tel cas, ladite éclisse de raccordement est par exemple telle que la première branche présente :
- une base formant une surface sensiblement plane de forme rectangulaire allongée,
- des flancs latéraux s'étendant sensiblement perpendiculairement à la base à partir des bords longitudinaux de celle-ci,
- des languettes découpées dans la base et repliées de manière à se trouver du même côté de la base que les flancs latéraux et à égale distance desdits flancs latéraux.

Dans une éclisse en tôle selon la présente invention, on peut aussi prévoir que la seconde branche est réalisée à partir d'une partie en tôle rectangulaire allongée dans laquelle deux découpes transversales sont réalisées de manière à former dans la partie centrale de la partie rectangulaire trois bandes de matière ; qu'un bord longitudinal de la partie rectangulaire est relié à la première branche par la zone charnière ; que l'autre bord longitudinal est plié de manière à former une première goulotte longitudinale du côté opposé à la zone charnière, et que les trois bandes de matière sont pliées toutes trois de manière similaire en formant une seconde goulotte parallèle à la première mais dont la concavité est orientée à l'opposé de la concavité de ladite première goulotte.

Une éclisse de raccordement selon la présente invention peut également être réalisée à partir de fils pliés et soudés. Dans une telle forme de réalisation, ladite éclisse comporte par exemple un premier fil transversal destiné à s'étendre entre deux fils de trame d'extrémité et est telle que la première branche comporte au moins un second fil plié en forme de U et soudé à califourchon sur le premier fil transversal ; que le premier fil transversal porte à chacune de ses extrémités un fil en forme d'étrier comportant une base et deux bras ; que la base de chaque étrier est soudée à une extrémité libre du premier fil transversal, et que chaque bras de l'étrier s'étend sensiblement parallèlement au premier fil transversal en formant un coude dont la concavité est destinée à être orientée vers l'intérieur du chemin de câbles.

La présente invention concerne également un ensemble formé d'un tronçon de chemin de câbles et d'au moins une éclisse, caractérisé en ce que chaque éclisse est une éclisse telle que décrite ci-dessus. Un tel ensemble est de préférence caractérisé en ce que le tronçon de chemin de câbles en fils comporte, d'une part, des fils de chaîne longitudinaux et, d'autre part, des fils de trame transversaux de manière à définir une goulotte présentant un fond délimité par deux parois latérales, et en ce que chaque éclisse est montée sur le tronçon de chemin de câbles de telle sorte qu'elle chevauche un fil de trame, ce dernier étant avantageusement un fil de trame d'extrémité.

Des détails et avantages de la présente invention ressortiront mieux de la description qui suit, faite en référence aux dessins schématiques annexés sur lesquels :
La figure 1 montre une première forme de réalisation en perspective d'une éclisse selon la présente invention,
La figure 2 montre l'éclisse de la figure 1 montée de manière à réaliser l'éclissage de deux tronçons de chemin de câbles,
La figure 3 montre en perspective une variante de réalisation selon la présente invention,
La figure 4 correspond à la variante de la figure 3 en position pour réaliser l'éclissage de deux tronçons de chemin de câbles de grande largeur,
La figure 5 est une autre variante de réalisation d'une éclisse en tôle selon la présente invention,
La figure 6 montre une variante de réalisation en fils d'une éclisse selon l'invention, l'éclisse étant représentée en perspective en position d'éclissage entre deux tronçons de chemin de câbles en fils,
La figure 7 est une vue de côté d'un éclissage selon une autre variante de réalisation, et
La figure 8 montre en perspective l'éclissage de la figure 7.

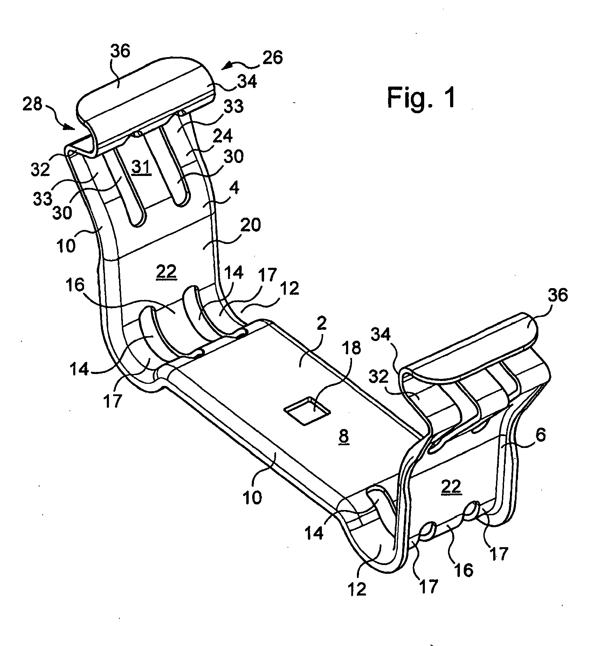

La figure 1 montre une première forme de réalisation d'une éclisse selon la présente invention.

L'éclisse de la figure 1 présente une forme générale en U. Ainsi, cette éclisse présente une base, ou première branche 2, disposée entre deux bras latéraux appelés par la suite deuxième branche 4 et troisième branche 6. Comme il ressort de la figure 1, l'éclisse représentée ici est réalisée à partir d'une tôle, par exemple une tôle en acier galvanisé, découpée et pliée pour obtenir la forme représentée et décrite ci-après.

La première branche 2 présente une partie centrale 8 sensiblement plane. On supposera dans la suite de la description que cette partie plane est horizontale. On suppose également que la deuxième branche 4 et la troisième branche 6 s'étendent à partir de la première branche 2 vers le haut. Enfin, comme on le remarque, la partie centrale 8 est de forme rectangulaire allongée. On suppose que les longs côtés de cette forme rectangulaire s'étendent selon une direction appelée direction transversale. Par conséquent, les petits côtés de cette partie centrale s'étendent longitudinalement. Cette orientation est choisie pour la suite de la description. Comme on le verra plus loin, elle correspond à l'orientation d'une éclisse reliant deux tronçons de chemin de câbles en fils dont le fond s'étend horizontalement. Cette orientation correspond à une orientation « naturelle » de l'éclisse.

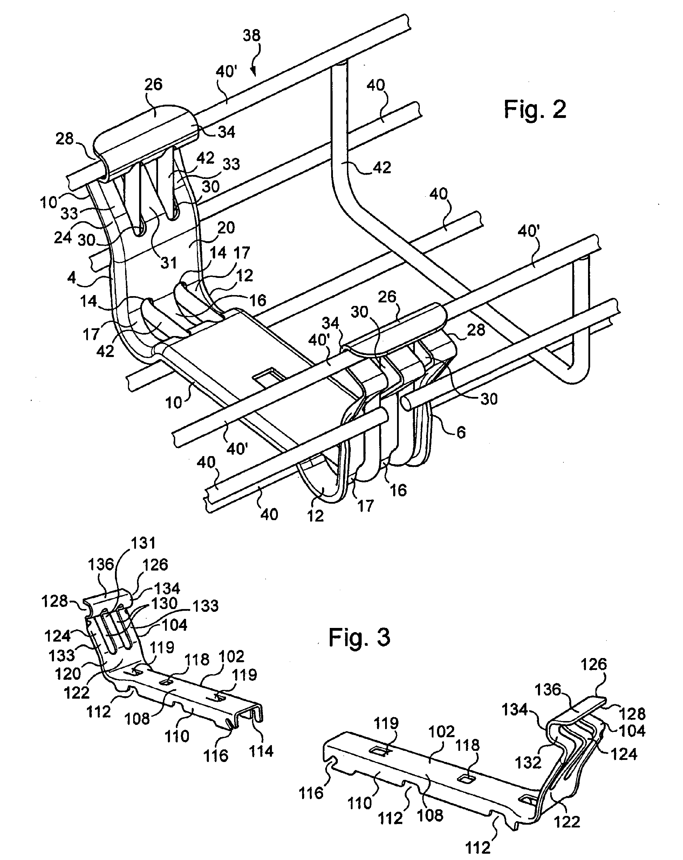

La partie centrale 8 présente des rebords transversaux 10 (dont un seul est visible sur les figures 1 et 2) sur ses deux bords transversaux. Ces rebords transversaux 10 sont formés par pliage du bord de la tôle à environ 90°. Ainsi, les rebords transversaux 10 s'étendent à la verticale vers le bas à partir de la partie centrale 8. Ces rebords 10 forment des renforts de la partie centrale 8, afin de rigidifier celle-ci. Ils sont orientés vers le bas afin de ne pas risquer de blesser les câbles qui seront disposés dans le chemin de câbles.

Les extrémités de la partie centrale 8, au niveau des bords longitudinaux de celle-ci sont incurvés. On retrouve alors à chaque extrémité de la partie centrale 8 une goulotte 12 s'étendant longitudinalement. Cette goulotte 12 est disposée en dessous du plan horizontal de la partie centrale 8. Le fond de la goulotte 12 présente sensiblement la forme d'un demi-cylindre circulaire dont la concavité est orientée vers le haut. Les rebords transversaux 10 sont prolongés au niveau de chacune des goulottes 12 et viennent ainsi également renforcer celles-ci.

On remarque également sur la figure 1 la présence de deux premières fentes transversales 14 dans le fond de chaque goulotte 12. Ces premières fentes transversales 14 définissent à chaque fois, pour chaque goulotte 12, d'une part, une bande de matière entre les fentes formant un bossage d'écartement 16 dont la fonction apparaîtra immédiatement à l'homme du métier à la vue de la figure 2 et, d'autre part, deux bandes de matière latérales, formant deux butées latérales 17. On remarque en outre au centre de la partie centrale 8 la présence d'une lumière 18. Cette dernière peut être mise à profit pour la fixation d'un accessoire, par exemple une tige filetée de suspension.

La deuxième branche 4 et la troisième branche 6 sont similaires et montées symétriquement par rapport à la première branche 2. Ainsi, seule la deuxième branche 4 est décrite ci-après. La deuxième branche 4 s'étend à partir du bord longitudinal d'une goulotte 12 de la première branche 2. Cette deuxième branche 4 s'étend sensiblement verticalement vers le haut à partir de la première branche 2.

La deuxième branche 4 présente plusieurs parties décrites ci-après.

Une première partie de la deuxième branche 2 sera appelée base 20. Cette dernière comporte une partie plane verticale 22. Une deuxième partie de la deuxième branche 4 présente un plan incliné 24. Ce dernier est raccordé à la partie plane verticale 22. Une zone de transition présentant un rayon de courbure plus ou moins important est prévu entre la partie plane verticale 22 et le plan incliné 24. Le plan incliné s'étend à partir de la base 20 de manière divergente, c'est-à-dire en s'éloignant de la troisième branche 6.

La deuxième branche 4 se termine du côté de son extrémité libre par une languette recourbée formant un crochet 26. Ce crochet 26 définit un logement longitudinal 28 qui est ouvert vers l'extérieur de l'éclisse.

Les rebords transversaux 10 se prolongent le long de la partie plane verticale 22 ainsi que le long du plan incliné 24.

On remarque la présence de deuxièmes fentes transversales 30. Celles-ci sont alignées avec les premières fentes transversales 14 et s'étendent sur tout ou partie du plan incliné 24 ainsi que partiellement au niveau du crochet 26. On retrouve ici trois bandes de matière au niveau des fentes transversales 30 : une bande d'écartement 31 entre les deuxièmes fentes transversales 30 et deux bandes latérales 33 de part et d'autre des deuxièmes fentes transversales 30.

Le crochet 26 comporte un retour 32 qui s'étend à l'horizontale ou en étant peu incliné par rapport à l'horizontale à partir du plan incliné 24, vers l'intérieur de l'éclisse, c'est-à-dire vers la troisième branche 6 de l'éclisse. Ce retour est ensuite prolongé par un fond recourbé 34 qui porte l'extrémité libre du crochet 26 en forme de languette 36. La languette 36 et le retour 32 sont sensiblement plans et les plans correspondants sont légèrement divergents à partir du fond recourbé 34.

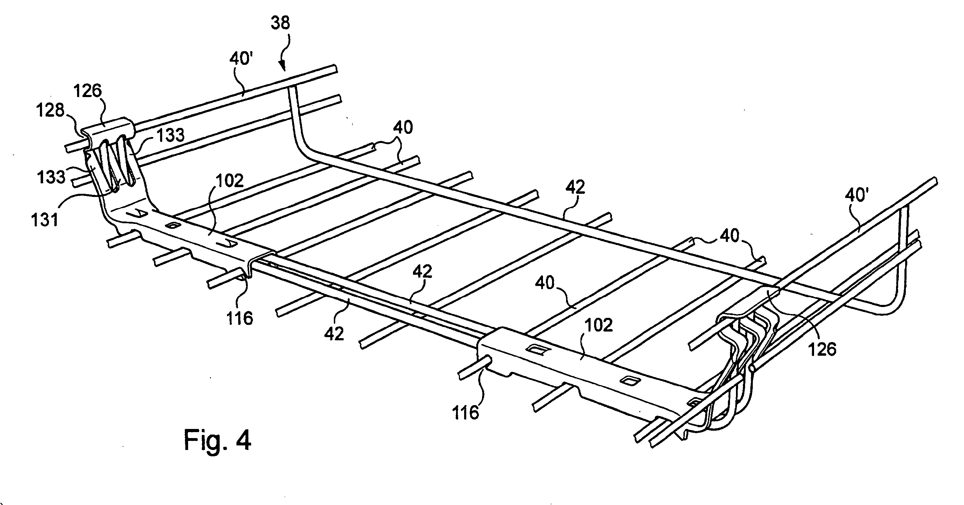

La figure 2 illustre l'utilisation de l'éclisse de la figure 1 pour relier deux tronçons de chemin de câbles 38. On considère ici un chemin de câbles en fils qui présente des fils de chaîne 40 longitudinaux rectilignes ainsi que des fils de trame 42 transversaux en forme de U. On remarque que certains fils de chaîne ne sont pas parfaitement rectilignes. Il s'agit des fils de rive 40' qui présentent des décrochements. En effet, le chemin de câbles représenté ici est réalisé conformément à l'invention décrite dans le document EP-0 298 825 et, plus particulièrement, ce chemin de câbles est du type de celui montré sur la figure 4 de ce document.

Pour réaliser l'éclissage montré sur la figure 2, on peut choisir de mettre les deux tronçons de chemin de câbles 38 en position bout à bout ou bien on peut prémonter l'éclisse de la figure 1 sur une extrémité de tronçon de chemin de câbles puis venir encliqueter l'ensemble constitué sur l'autre tronçon de chemin de câbles.

Dans le premier cas, lorsque les deux tronçons de chemin de câbles 38 sont bout à bout, il est proposé de positionner l'éclisse de telle sorte que le logement longitudinal 28 reçoive les deux extrémités en vis-à-vis des fils de rive 40' des tronçons de chemin de câbles 38. On suppose ici que le fond des tronçons de chemin de câbles est dans un plan horizontal. Lorsque l'éclisse est présentée par rapport auxdits tronçons de chemin de câbles 38, la première branche 2 est par exemple inclinée d'un angle d'environ 45° par rapport à l'horizontale. L'éclisse est alors pivotée autour des deux extrémités de fils de rive 40' de telle sorte que la première branche 2 de l'éclisse se rapproche du fond du chemin de câbles. Les dimensions de l'éclisse sont bien entendu adaptées à celles du chemin de câbles.

Lorsque la première branche 2 de l'éclisse se rapproche du fond du tronçon de chemin de câbles, le plan incliné 24 de la troisième branche 6 de l'éclisse, ou plus précisément le rebord transversal 10 se trouvant au niveau du plan incliné 24, vient au contact des fils de rive 40' opposés. Pour pouvoir continuer la rotation, il convient de serrer la troisième branche 6 vers la deuxième branche 4 en déformant l'éclisse. Cette déformation est possible grâce à l'élasticité de l'éclisse obtenue notamment par la conformation des goulottes 12. Lorsque le crochet 26 de la troisième branche 6 arrive alors au niveau des fils de rive 40' correspondants, l'éclisse revient vers sa forme initiale non déformée et les extrémités des fils de rive 40' viennent prendre place contre le fond recourbé 34 de la troisième branche 6. On arrive alors à la position montée représentée sur la figure 2.

On remarque que les fils de trame 42 d'extrémité viennent prendre place, d'une part, dans les premières fentes transversales 14 et, d'autre part, dans les deuxièmes fentes transversales 30. Les bossages d'écartement 16 des goulottes 12, de même que la bande d'écartement 31 se trouvant entre les deuxièmes fentes transversales 30, assurent l'espacement des deux fils de trame 42 d'extrémité. Les butées latérales 17 et les bandes latérales 33 permettent de maintenir les fils de trame 42 d'extrémité dans leur position longitudinalement. Les crochets 26 assurent quant à eux le maintien des fils de rive 40' verticalement. On réalise de la sorte un bon éclissage des deux tronçons de chemin de câbles 38.

L'éclisse est ainsi montée par un montage pivotant avec en fin de montage un encliquetage. Pour cet encliquetage, on se sert de l'élasticité de l'éclisse ainsi que du bossage formé par les plans inclinés 24 et la liaison de ceux-ci avec les crochets 26.

Comme indiqué précédemment, il est également possible de monter l'éclisse en extrémité d'un tronçon de chemin de câbles 38 puis de réaliser un éclissage avec un second tronçon de chemin de câbles 38. L'éclisse se monte sur une extrémité de tronçon de chemin de câbles comme décrit ci-dessus en référence au montage sur deux extrémités de tronçons de chemin de câbles afin de réaliser leur éclissage. Une fois l'éclisse montée à l'extrémité d'un premier tronçon de chemin de câbles 38, par un mouvement relatif vertical entre les deux extrémités de tronçons de chemin de câbles, on vient réaliser l'éclissage du second tronçon. Au départ, le tronçon équipé de l'éclisse est positionné par rapport au second tronçon de chemins de câbles 38 de telle sorte que la partie de l'éclisse en saillie du premier tronçon de chemin de câbles 38 soit disposée au-dessus du fil de trame 42 d'extrémité du second tronçon de chemin de câbles 38. On suppose ici par exemple que le premier tronçon de chemin de câbles 38, avec l'éclisse, est mobile par rapport au second tronçon de chemin de câbles 38 supposé fixe. Lorsque le premier tronçon de chemin de câbles 38 descend, le fil de trame 42 d'extrémité du second tronçon de chemin de câbles 38 va venir s'engager dans les deuxièmes fentes transversales 30. Les fils de rive 40' du second tronçon de chemin de câbles 38 vont quant à elles entrer en contact avec le plan incliné 24 de la deuxième branche 4 et de la troisième branche 6 de l'éclisse. En appuyant, du fait de l'inclinaison des plans inclinés 24, une déformation de l'éclisse va être engendrée entraînant un resserrement l'une vers l'autre de la deuxième branche 4 et de la troisième branche 6. Lorsque les fils de rive 40' arrivent alors au niveau des crochets 26 de la deuxième branche 4 et de la troisième branche 6, la deuxième branche 4 et la troisième branche 6 peuvent s'écarter vers leur position de repos. L'éclissage est alors réalisé.

Il est prévu plus haut que dans la position éclissée, l'éclisse est revenue vers une position de repos. On peut prévoir que dans la position éclissée la deuxième branche 4 et la troisième branche 6 sont légèrement précontraintes. De la sorte, on réalise un meilleur maintien mécanique de l'éclisse sur le tronçon de chemin de câbles et il est également possible de la sorte de compenser différents jeux dus par exemple aux tolérances de fabrication des tronçons de chemin de câbles et de l'éclisse.

Les figures 3 et 4 illustrent une variante de réalisation destinée à réaliser l'éclissage de chemin de câbles de grandes largeurs. Il est proposé ici de « couper » l'éclisse de la figure 1 en deux. On obtient de la sorte les deux éclisses illustrées sur les figures 3 et 4.

Dans cette seconde forme de réalisation, on remarque que les éclisses représentées sont en forme d'équerre. On a donc ici uniquement une première branche 102 et une seconde branche 104.

La première branche 102 présente une partie centrale 108 plane. On reprend ici la même orientation que précédemment et cette partie centrale 108 est supposée horizontale. Elle présente également une forme rectangulaire allongée, les grands bords du rectangle s'étendant selon une direction transversale et les petits bords s'étendant selon une direction longitudinale. Un petit bord longitudinal est un bord libre tandis que l'autre bord longitudinal réalise la liaison avec la seconde branche 104. Les bords transversaux de la partie centrale 8 sont repliés vers le bas de manière à former de part et d'autre de la partie centrale des rebords transversaux 110.

On remarque dans les rebords transversaux 110, du côté de la seconde branche 104, des premières encoches 112. Comme il ressort de la figure 4, l'homme du métier comprend immédiatement que ces premières encoches 112 sont destinées à permettre le passage de fils de chaîne 40 d'un tronçon de chemin de câbles 38.

On remarque également du côté de l'extrémité libre de la partie centrale 108, la présence d'une seconde encoche 114 et d'une troisième encoche 116. La deuxième encoche 114 est de même forme générale que les premières encoches 112. Il s'agit en effet d'une encoche en forme du U, les branches du U étant orientées verticalement et le U étant ouvert vers le bas. La différence entre la deuxième encoche 114 et les premières encoches 112 est la largeur de ces encoches. La deuxième encoche 114 est de largeur moindre par rapport aux premières encoches 112. En effet, comme on le verra plus tard, la deuxième encoche 114 sera utilisée pour le positionnement selon la direction transversale d'un second tronçon de chemin de câbles 38 par rapport à un premier tronçon de chemin de câbles 38.

La troisième encoche 116 est également une encoche en forme de U. Toutefois l'ouverture de cette encoche est orientée vers le bas en étant inclinée vers l'extérieur de l'éclisse, par exemple d'un angle compris entre 30 et 60°, par exemple 45°.

On retrouve dans la partie centrale 108 la présence d'une lumière 118 similaire à la lumière 18 de l'éclisse des figures 1 et 2.

La partie centrale 108 de la première branche 102 comporte également des languettes d'écartement 119. Ces dernières sont réalisées par découpe et pliage. Dans la forme de réalisation représentée sur les figures 3 et 4, une fenêtre rectangulaire est découpée sur trois côtés et la languette résultante est repliée vers le bas formant ainsi à chaque fois une languette d'écartement 119.

La forme de réalisation proposée sur les figures 3 et 4 ne reprend pas la goulotte des figures 1 et 2. La liaison entre la première branche 102 et la seconde branche 104 est assurée par une simple zone de pliage. La seconde branche 104 est similaire à la deuxième branche 4 des figures 1 et 2. Elle présente une base 120 avec une partie plane verticale 122 et un plan incliné 124. Cette seconde branche 104 se termine par un crochet 126 qui définit un logement longitudinal 128. On retrouve également des secondes fentes transversales 130 qui s'étendent dans le plan incliné 124 puis dans un retour 132 pour se terminer dans un fond recourbé 134 en définissant une bande d'écartement 131 et deux bandes latérales 133, le crochet 126 se terminant par une languette 136.

Ici également il est prévu d'avoir une élasticité entre la première branche 102 et la seconde branche 104. Cette élasticité est suffisante pour permettre un montage à la main de l'éclisse. Ainsi, si la première branche 102 est maintenue fixe, une pression horizontale de quelques kilogrammes (à titre indicatif, de 1 à 10 kg) au niveau du crochet 126, par exemple sur la languette 136, doit permettre une flexion de l'ordre de 5 mm à 1 cm du fond recourbé 134 vers l'intérieur de l'éclisse. La raideur de l'éclisse est ainsi déterminée en fonction des dimensions de la seconde branche 104. Ces valeurs sont données à titre indicatif pour illustrer la présente description. Elles sont valables pour toutes les formes de réalisation d'une éclisse selon la présente invention.

Les éclisses des figures 3 et 4 sont prévues pour être prémontées sur une extrémité d'un tronçon de chemin de câbles 38. Pour réaliser ce prémontage, il est prévu d'introduire une extrémité d'un fil de chaîne 40 du fond du chemin de câbles dans la troisième encoche 116 de l'éclisse. On suppose ici que le fond du chemin de câbles est posé à l'horizontale. La première branche 102 de l'éclisse est par exemple inclinée à 45° par rapport à l'horizontale. Cette éclisse est ensuite pivotée autour du fil de chaîne 40 logé dans la troisième encoche 116 de manière à rapprocher la première branche 102 du fond du tronçon de chemin de câbles 38. Le plan incliné 124, ou plus précisément le rebord transversal 110 au niveau du plan incliné 124, vient alors au contact du fil de rive 40' correspondant. En déformant l'éclisse comme décrit précédemment, on réalise alors l'encliquetage de l'éclisse sur l'extrémité du premier tronçon de chemin de câbles 38. L'extrémité du fil de rive 40' se retrouve alors logée dans le logement longitudinal 128 du crochet 126.

Une éclisse est montée de la sorte au niveau de chaque aile latérale du premier tronçon de chemin de câbles 38. On peut alors réaliser l'éclissage avec un second tronçon de chemin de câbles 38 de la même manière que celle décrite précédemment en référence à la figure 2 : il suffit de venir encliqueter l'extrémité du second tronçon de chemin de câbles 38 dans les éclisses prémontées sur l'extrémité du premier tronçon de chemin de câbles 38.

En position éclissée, les fils de trame 42 d'extrémité sont maintenus écartés par les languettes d'écartement 119 et par la bande d'écartement 131. Le maintien latéral des fils de trame 42 d'extrémité est assuré ici par les rebords transversaux 110 au niveau de la première branche 102 et par les bandes latérales 133 au niveau de la seconde branche 104. Un maintien dans le sens vertical est assuré par le crochet 126 et aussi par la troisième encoche 116 et la seconde encoche 114. Comme pour la forme de réalisation des figures 1 et 2, l'élasticité de l'éclisse participe ici au bon maintien de l'éclisse sur le chemin de câbles et ainsi au bon éclissage des deux tronçons de chemin de câbles 38.

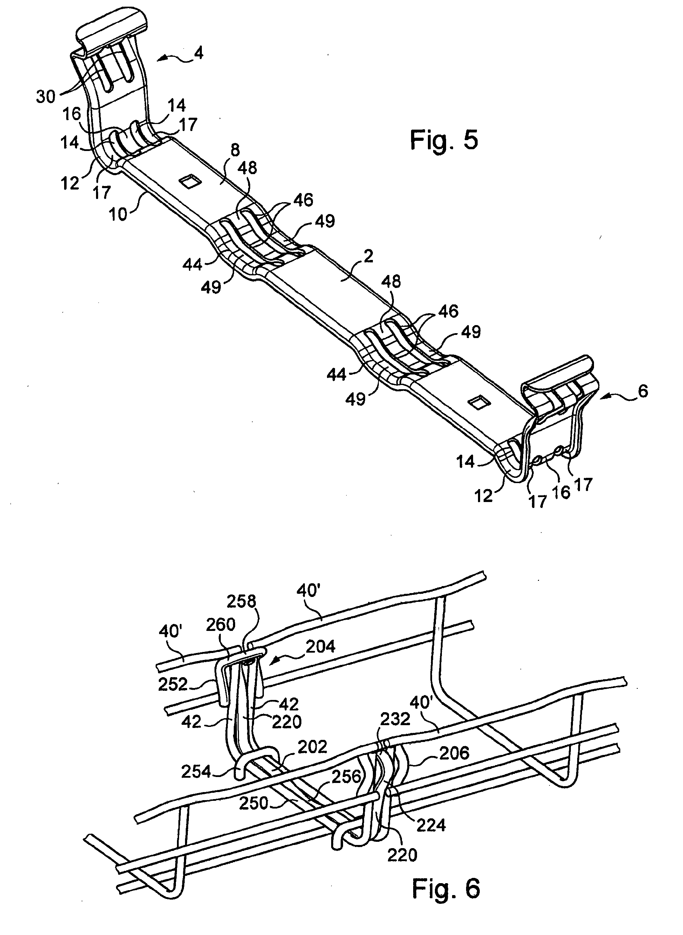

La forme de réalisation représentée sur la figure 5 est destinée à réaliser l'éclissage de chemins de câbles de largeurs intermédiaires.

La structure de l'éclisse représentée sur la figure 5 est très proche de celle représentée sur les figures 1 et 2. Il est donc proposé de reprendre pour la description de cette figure les mêmes références que celles utilisées pour la description des figures 1 et 2.

On retrouve ici une éclisse présentant une première branche 2, une seconde branche 4 et une troisième branche 6. La deuxième branche 4 et la troisième branche 6 reprennent exactement la même structure que la deuxième branche 4 et la troisième branche 6 de la figure 1.

La première branche 2 comporte elle aussi une partie centrale 8 avec des rebords transversaux 10 et des goulottes 12 au niveau des extrémités. Dans cette forme de réalisation de la figure 5, la première branche 2 est plus longue que la première branche 2 sur la figure 1, de manière à s'adapter à un chemin de câbles de plus grande largeur. Pour réaliser un meilleur maintien au niveau de fond du chemin de câbles, il est proposé ici de réaliser dans la partie centrale des déformations en creux, comme le creux d'une vague, ces déformations étant appelées ici dépressions 44. Au niveau de chacune des dépressions 44, sont réalisées des troisièmes fentes transversales 46. Ces troisièmes fentes transversales sont alignées avec les premières fentes transversales 14 et les deuxièmes fentes transversales 30. Pour chaque dépression 44, on a donc deux troisièmes fentes transversales 46 s'étendant parallèlement et définissant entre elles une bande d'écartement 48 et deux bandes latérales 49.

Les troisièmes fentes transversales 46 sont destinées à recevoir des fils de trame 42 d'extrémité, les bandes d'écartement 48 permettant d'assurer un écartement prédéterminé de ces fils de trame 42 d'extrémité et, avec les bandes latérales 49, le maintien longitudinal de ceux-ci. On réalise ainsi un meilleur maintien des deux tronçons de chemin de câbles 38 au niveau du fond du chemin de câbles.

Alors que dans les formes de réalisation des figures 1 à 5, les éclisses sont réalisées à partir d'une tôle découpée et pliée, il est proposé de réaliser une éclisse selon l'invention à partir de fils découpés, pliés et soudés pour obtenir les formes de réalisation représentées sur les figures 6 à 8. Le fil utilisé est par exemple de même nature que les fils utilisés pour réaliser les tronçons de chemin de câbles.

Dans les formes de réalisation des figures 6 à 8, on retrouve une éclisse dont la structure présente une première branche 202, une deuxième branche 204 et une troisième branche 206. Dans les formes de réalisation représentée, cinq fils distincts sont utilisés. Ces fils sont de trois types différents : fil central 250, fil d'extrémité 252 et fil de fond 254. Il y a ici un fil central 250, deux fils d'extrémité 252 et deux fils de fond 254.

La forme du fil central 250 est une forme générale en U. Elle présente une base 256 sensiblement rectiligne. Cette base 256 est utilisée ici pour réaliser l'écartement entre deux fils de trame 42 d'extrémité et vient se loger entre deux tels fils de trame 42. Dans la forme de réalisation représentée, la base 256 est simplement repliée à ses extrémités (sans reprendre la forme des goulottes 12). Les deux ailes du fil central 250 sont symétriques. Une seule d'entre elles est donc décrite ici. Du côté de la base 256, l'aile du fil central présente tout d'abord une première partie verticale 220. On suppose ici aussi que la base 256 de l'éclisse est orientée horizontalement. Les ailes du fil central 250 s'étendent au-dessus de la base 256. En outre, le fil central 250 est disposé dans un plan transversal.

La première partie verticale 220 est prolongée par une deuxième partie inclinée 224, cette deuxième partie s'écartant de l'aile opposée du fil central 250 en U. Chaque aile du fil central 250 se termine par un retour 232 orienté sensiblement horizontalement vers l'intérieur de l'éclisse.

L'extrémité libre du retour 232 porte à chaque fois un fil d'extrémité 252.

Chaque fil d'extrémité 252 se présente sous la forme d'un étrier. Cet étrier présente une base 258 de laquelle s'étendent deux bras 260. Les deux bras sont symétriquement disposés par rapport à la base 258. La forme des bras 260 est telle que ceux-ci s'étendent sensiblement parallèlement à l'extrémité des ailes du fil central 250. Chaque bras 260 présente une forme globale en V. Une première branche du V, celle se trouvant du côté de la base 258 s'étend sensiblement parallèlement au retour 232. La seconde branche du V s'étend quant à elle sensiblement parallèlement à l'extrémité de la deuxième partie inclinée 224, et plus précisément l'extrémité de cette partie se trouvant du côté du retour 232. Le bras 260 est disposé dans un plan transversal tandis que la base 258 du fil d'extrémité 252 s'étend longitudinalement.

Les fils de fond 254 sont simplement en forme de U. Ils sont disposés dans un plan longitudinal, la base du U étant sensiblement horizontale et les branches du U étant orientées verticalement vers le bas. Les fils de fond 254 viennent chevaucher la base 256 du fil central 250 et servent de logement pour les fils de trame 42 d'extrémité des deux tronçons de chemin de câbles 38 à éclisser.

Le fonctionnement d'une éclisse en fils telle que représentée sur les figures 6 à 8 est similaire au fonctionnement des éclisses représentées sur les figures 1, 2 et 5. Pour mettre en place une éclisse sur une extrémité d'un tronçon de chemin de câbles 38 ou bien pour réaliser directement l'éclissage de deux tronçons de chemin de câbles 38 mis bout à bout, on vient mettre la base 258 d'un fil d'extrémité 252 en appui contre une (ou deux) extrémité(s) de fils de rive 40'. On vient alors faire pivoter l'éclisse de telle sorte que la base 256 du fil central 250 vienne prendre place entre les fils de trame 42 d'extrémité. Dans ce mouvement, les bossages formés par les bras 260 des fils d'extrémité 252 ainsi que par les extrémités des ailes du fil central 250 viennent au contact du (ou des) fil(s) de rive 40' opposé(s). En déformant alors l'éclisse en rapprochant la deuxième branche 204 de la troisième branche 206, on arrive au montage de l'éclisse. En position finale, les bases 258 sont en appui contre les extrémités des fils de rive 40' des tronçons de chemin de câbles 38 éclissés. Le fil central 250 s'étend quant à lui entre les deux fils de trame 42 d'extrémité des tronçons de chemin de câbles à raccorder.

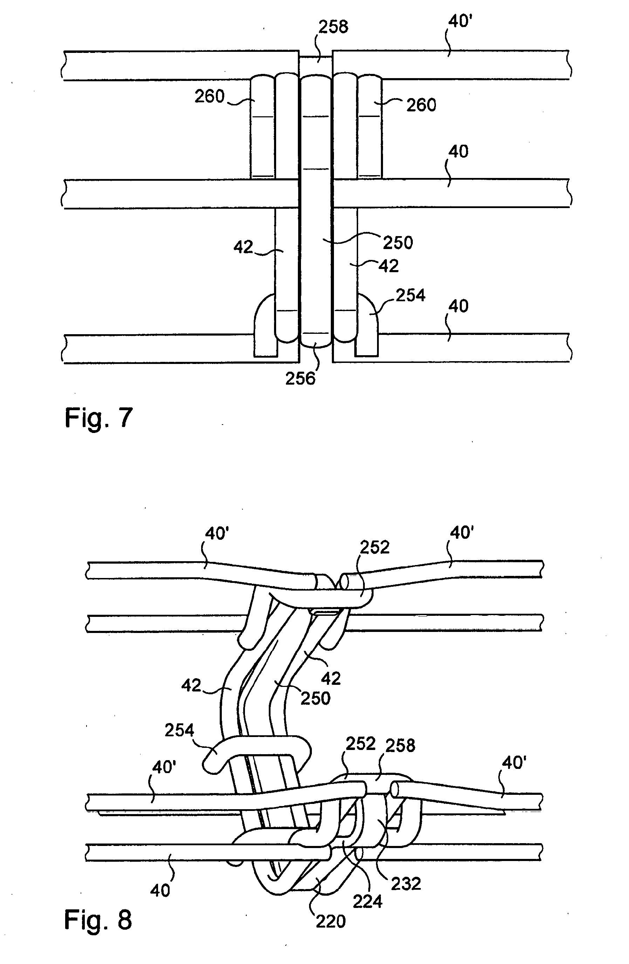

La forme de réalisation des figures 7 et 8 diffère de la forme de réalisation de la figure 6 uniquement en ce que le fil central est non pas un fil cylindrique circulaire mais plutôt en forme de ruban. De la sorte, on peut réaliser entre les deux fils de trame 42 d'extrémité des tronçons de chemin de câbles 38 un espacement légèrement plus important.

Comme il ressort de la description qui précède, une éclisse selon la présente invention peut réaliser avec une seule pièce l'éclissage de deux tronçons de chemin de câbles. Dans une variante de réalisation, il peut être envisagé d'avoir deux pièces pour réaliser un tel éclissage.

De par sa conception, une éclisse selon la présente invention s'adapte facilement à la forme et à l'esthétique du chemin de câbles auquel elle est destinée. Dans les formes de réalisation décrites, aucune arête agressive ne peut venir au contact des câbles destinés à prendre place dans le chemin de câbles car l'éclisse s'intègre parfaitement dans le chemin de câbles correspondant.

Alors que le plus souvent, les éclisses sont montées longitudinalement par rapport au chemin de câbles, l'invention propose ici une éclisse montée transversalement. Dans toutes les formes de réalisation, l'éclisse vient en appui sur une aile du chemin de câbles, de préférence au niveau du fil de rive de cette aile, et se prolonge au niveau du fond du chemin de câbles. L'éclisse est ainsi montée, par encliquetage, en venant en prise entre deux fils de chaîne du chemin de câbles. Dans les formes de réalisation à trois branches, l'éclisse vient en appui de préférence sur les deux fils de rive opposés (on pourrait ici envisager un appui sur des fils de chaîne intermédiaire de l'aile).

L'élasticité de l'éclisse est telle que son montage et son démontage sont possibles manuellement. Avantageusement, une éclisse selon l'invention est prémontée à l'extrémité d'un tronçon de chemin de câbles. Ce prémontage peut être fait manuellement ou par un moyen automatisé. L'éclisse est alors maintenue élastiquement sur le tronçon de chemin de câbles et peut être facilement retirée dans le cas par exemple où ledit tronçon de chemin de câbles doit être mis à longueur.

Un éclissage réalisé selon la présente invention permet d'assurer une bonne résistance mécanique et une bonne liaison des tronçons de chemin de câbles. Comme il ressort de la description qui précède, au niveau du fond du chemin de câbles, il est possible de bien maintenir les deux fils de trame d'extrémité des tronçons de chemin de câbles afin d'assurer une bonne liaison et une bonne tenue à la charge.

Lorsque l'éclisse est prémontée à l'extrémité d'un tronçon de chemin de câbles, la liaison avec un second tronçon de chemin de câbles peut s'effectuer facilement en venant simplement glisser, et encliqueter, le fil de trame d'extrémité du second tronçon de chemin de câbles sur l'éclisse prémontée.

Bien entendu, la présente invention ne se limite pas aux formes de réalisation décrites ci-dessus. Elle concerne également toutes les variantes de réalisation à la portée de l'homme du métier dans le cadre des revendications ci-après.

Ainsi, on ne sortirait pas du cadre de la présente invention en réalisant une éclisse en tôle dans laquelle la partie centrale de la première branche se trouverait non pas, en position montée, à l'intérieur du chemin de câbles mais à l'extérieur de celui-ci.

Des variantes de réalisation combinant par exemple une partie en tôle et une partie en fil peuvent bien sûr être envisagées. D'autres formes et d'autres matériaux peuvent également être envisagés. Une matière synthétique ou composite, obtenue par exemple par moulage, permettrait également de réaliser une éclisse selon la présente invention.

## Revendications

1. éclisse de raccordement pour tronçons de chemin de câbles en fils (38), ledit chemin de câbles en fils comportant, d'une part, des fils de chaîne (40, 40') longitudinaux et, d'autre part, des fils de trame (42) transversaux de manière à définir une goulotte présentant un fond délimité par deux parois latérales, ladite éclisse comportant une première branche (2 ; 102 ; 202) s'étendant selon une première direction transversale supposée horizontale ainsi qu'une seconde branche (4 ; 104 ; 204) s'étendant selon une seconde direction transversale sensiblement perpendiculaire à la première direction transversale, la seconde branche (4 ; 104 ; 204) étant donc supposée sensiblement verticale et disposée au-dessus de la première branche (2 ; 102 ; 202),
- la première branche (2 ; 102 ; 202) présentant :
des moyens d'appui (6 ; 115 ; 206), destinés à venir coopérer avec au moins un fil de chaîne (40, 40') de chaque tronçon de chemin de câbles (38), et
au moins deux butées latérales (17 ; 110 ; 254),
- la seconde branche (4 ; 104 ; 204) présentant :
des moyens d'appui (26 ; 126 ; 258), destinés à venir coopérer avec au moins un fil de chaîne (40') de chaque tronçon de chemin de câbles (38), et
au moins deux butées latérales (31 ; 131 ; 252),
des moyens d'écartement longitudinaux (16, 48 ; 119 ; 250), disposés entre les butées latérales (17 ; 110 ; 254), permettant de séparer deux fils de trame (42) d'extrémité étant prévus sur au moins l'une des branches (2, 4 ; 102, 104 ; 202, 204), **caractérisée en ce que** les deux branches sont reliées l'une à l'autre par une zone charnière élastique d'axe sensiblement longitudinal, et la seconde branche (4 ; 104 ; 204) présente au moins un bossage s'étendant sensiblement horizontalement.

2. Éclisse de raccordement selon la revendication 1, **caractérisée en ce que** les moyens d'appui de la première branche comportent une troisième branche (6 ; 206) symétrique à la seconde branche (2 ; 202) de telle sorte que l'éclisse présente une forme générale en U, le fond du U étant formé par la première branche (2 ; 202) de l'éclisse et les branches du U étant formées par la seconde branche (4 ; 204) et par la troisième branche (6 ; 206) de l'éclisse.

3. Éclisse de raccordement selon l'une des revendications 1 ou 2, **caractérisée en ce qu'**elle est réalisée par découpe et pliage d'une tôle.

4. Éclisse de raccordement selon la revendication 3, **caractérisée en ce que** la première branche (2 ; 102) présente :
- une base (8 ; 108) formant une surface sensiblement plane de forme rectangulaire allongée,
- des flancs latéraux (10 ; 110) s'étendant sensiblement perpendiculairement à la base à partir des bords longitudinaux de celle-ci,
- des languettes (119) découpées dans la base et repliées de manière à se trouver du même côté de la base que les flancs latéraux et à égale distance desdits flancs latéraux.

5. Éclisse de raccordement selon l'une des revendications 3 ou 4, **caractérisée en ce que** la seconde branche (4 ; 104) est réalisée à partir d'une partie en tôle rectangulaire allongée dans laquelle deux découpes transversales (30 ; 130) sont réalisées de manière à former dans la partie centrale de la partie rectangulaire trois bandes de matière, **en ce qu'**un bord longitudinal de la partie rectangulaire est relié à la première branche par la zone charnière, **en ce que** l'autre bord longitudinal est plié de manière à former une première goulotte longitudinale (28 ; 128) du côté opposé à la zone charnière, et **en ce que** les trois bandes de matière sont pliées toutes trois de manière similaire en formant une seconde goulotte parallèle à la première mais dont la concavité est orientée à l'opposé de la concavité de ladite première goulotte (28 ; 128).

6. Éclisse de raccordement selon l'une des revendications 1 ou 2, **caractérisée en ce qu'**elle est réalisée à partir de fils pliés et soudés.

7. Éclisse selon la revendication 6, **caractérisée en ce qu'**elle comporte un premier fil transversal (250) destiné à s'étendre entre deux fils de trame (42) d'extrémité, **en ce que** la première branche (202) comporte au moins un second fil (254) plié en forme de U et soudé à califourchon sur le premier fil transversal (250), **en ce que** le premier fil transversal (250) porte à chacune de ses extrémités un fil (252) en forme d'étrier comportant une base (258) et deux bras (260), **en ce que** la base (258) de chaque étrier est soudée à une extrémité libre du premier fil transversal (250), et **en ce que** chaque bras (260) de l'étrier (252) s'étend sensiblement parallèlement au premier fil transversal (250) en formant un coude dont la concavité est destinée à être orientée vers l'intérieur du chemin de câbles.

8. Ensemble formé d'un tronçon de chemin de câbles et d'au moins une éclisse, **caractérisé en ce que** chaque éclisse est une éclisse selon l'une des revendications 1 à 7.

9. Ensemble selon la revendication 8, **caractérisé en ce que** le tronçon de chemin de câbles en fils comporte d'une part des fils de chaîne (40, 40') longitudinaux et d'autre part des fils de trame (42) transversaux de manière à définir une goulotte présentant un fond délimité par deux parois latérales, et **en ce que** chaque éclisse est montée sur le tronçon de chemin de câbles (38) de telle sorte qu'elle chevauche un fil de trame (42).

10. Ensemble selon la revendication 9, **caractérisé en ce que** le fil de trame (42) est un fil de trame d'extrémité.

## Patentansprüche

1. Verbinder für Gitterkabelrinnenabschnitte (38), wobei die Gitterkabelrinne einerseits längs verlaufende Kettdrähte (40, 40') und andererseits quer verlaufende Schussdrähte (42) umfasst, so dass eine Wanne mit einem von zwei Seitenwänden begrenzten Boden gebildet wird, wobei der Verbinder einen ersten Schenkel (2; 102; 202) aufweist, der sich in einer angenommenen horizontalen ersten Querrichtung erstreckt, sowie einen zweiten Schenkel (4; 104; 204), der sich in einer zur ersten Querrichtung im Wesentlichen senkrechten zweiten Querrichtung erstreckt, wobei der zweite Schenkel (4; 104; 204) somit als im Wesentlichen vertikal verlaufend und über dem ersten Schenkel (2; 102; 202) angeordnet angenommen wird,
- wobei der erste Schenkel (2; 102; 202)
Auflagemittel (6; 116; 206) zum Zusammenzuwirken mit wenigstens einem Kettdraht (40, 40') eines jeden Kabelrinnenabschnitts (38), und
wenigstens zwei Seitenanschläge (17; 110; 254) aufweist,
- wobei der zweite Schenkel (4; 104; 204)
Auflagemittel (26; 126; 258) zum Zusammenzuwirken mit wenigstens einem Kettdraht (40') eines jeden Kabelrinnenabschnitts (38), und
wenigstens zwei Seitenanschläge (31; 131; 252) aufweist,
wobei zwischen den Seitenanschlägen (17; 110; 254) angeordnete, längs verlaufende Abstandsmittel (16, 48; 119; 250) zwei äußere Schussdrähte (42) voneinander zu trennen vermögen, die auf wenigstens einem der Schenkel (2, 4; 102, 104; 202, 204) vorgesehen sind,
**dadurch gekennzeichnet, dass** die beiden Schenkel miteinander durch einen elastischen Gelenkbereich mit einer im Wesentlichen längs verlaufenden Achse verbunden sind, und der zweite Schenkel (4; 104; 204) wenigstens eine sich im Wesentlichen horizontal erstreckende Vorwölbung aufweist.

2. Verbinder nach Anspruch 1,
**dadurch gekennzeichnet, dass** die Auflagemittel des ersten Schenkels einen zu dem zweiten Schenkel (2; 202) symmetrischen dritten Schenkel (6; 206) aufweisen, so dass der Verbinder allgemein die Form eines U aufweist, wobei der Boden des U von dem ersten Schenkel (2; 202) des Verbinders gebildet wird und die Schenkel des U von dem zweiten Schenkel (4; 204) und dem dritten Schenkel (6; 206) des Verbinders gebildet werden.

3. Verbinder nach einem der Ansprüche 1 oder 2,
**dadurch gekennzeichnet, dass** er durch Schneiden und Biegen eines Blechs gebildet wird.

4. Verbinder nach Anspruch 3,
**dadurch gekennzeichnet, dass** der erste Schenkel (2; 102) umfasst:
- eine Basis (8; 108), die eine im Wesentlichen ebene Oberfläche mit länglicher rechteckiger Form bildet,
- Seitenteile (10; 110), die sich im Wesentlichen senkrecht zur Basis von deren Seitenrändern aus erstrecken,
- Laschen (119), die in die Basis geschnitten und derart gebogen sind, dass sie sich auf derselben Basisseite wie die Seitenteile und mit gleichem Abstand zu diesen Seitenteilen befinden.

5. Verbinder nach einem der Ansprüche 3 oder 4,
**dadurch gekennzeichnet, dass** der zweite Schenkel (4; 104) anhand eines länglichen rechteckigen Blechteils realisiert ist, in dem zwei quer verlaufende Schnitte (30; 130) solchermaßen ausgeführt sind, dass in dem mittlerne Teil des rechteckigen Teils drei Streifen aus einem Stück gebildet werden, dass ein Längsrand des rechteckigen Teils mit dem ersten Schenkel durch den Gelenkbereich verbunden ist, dass der andere Seitenrand solchermaßen gebogen ist, dass eine erste Längsrinne (28; 128) auf der dem Gelenkbereich entgegengesetzten Seite gebildet wird, und dass die drei aus einem Stück gebildeten Streifen alle drei in gleicher Weise gebogen sind und dabei eine zu der erste Rinne parallele zweite Rinne bilden, deren Konkavität jedoch zu der der Konkavität der ersten Rinne (28; 128) entgegengesetzten Seite weist.

6. Verbinder nach einem der Ansprüche 1 oder 2,
**dadurch gekennzeichnet, dass** er anhand von gebogenen und geschweißten Drähten ausgeführt ist.

7. Verbinder nach Anspruch 6,
**dadurch gekennzeichnet, dass** er einen ersten Querdraht (250) aufweist, der dazu bestimmt ist, zwischen zwei äußeren Schussdrähten (42) zu verlaufen, dass der erste Schenkel (202) wenigstens einen U-förmig gebogenen und rittlings auf den ersten Querdraht (250) geschweißten zweiten Draht (254) aufweist, dass der erste Querdraht (250) an jedem seiner Enden einen Draht (252) in Form eines Bügels mit einer Basis (258) und zwei Armen (260) aufweist, dass die Basis (258) eines jeden Bügels an ein freies Ende des ersten Querdrahts (250) geschweißt ist, und dass sich jeder Arm (260) des Bügels (252) im Wesentlichen parallel zu dem ersten Querdraht (250) erstreckt und dabei eine Biegung bildet, deren Konkavität dazu bestimmt ist, nach innen in die Kabelrinne gerichtet zu sein.

8. Anordnung gebildet aus einem Kabelrinnenabschnitt und wenigstens einem Verbinder,
**dadurch gekennzeichnet, dass** jeder Verbinder ein Verbinder nach einem der Ansprüche 1 bis 7 ist.

9. Anordnung nach Anspruch 8,
**dadurch gekennzeichnet, dass** der Gitterkabelrinnenabschnitt einerseits längs verlaufende Kettdrähte (40, 40') und andererseits quer verlaufende Schussdrähte (42) aufweist, so dass eine Wanne mit einem von zwei Seitenwänden begrenzten Boden gebildet wird, und dass jeder Verbinder an dem Kabelrinnenabschnitt (38) solchermaßen angebracht ist, dass er einen Schussdraht (42) überlappt.

10. Anordnung nach Anspruch 9,
**dadurch gekennzeichnet, dass** der Schussdraht (42) ein äußerer Schussdraht ist.

## Claims

1. Connecting splice member for wire cable tray portions (38), said wire cable tray comprising, firstly, longitudinal warp wires (40, 40') and, secondly, transverse weft wires (42) in such a way as to define a gutter having a bottom which is delimited by two side walls, said splice member comprising a first branch (2; 102; 202) extending in a first transverse direction which is intended to be horizontal, and a second branch (4; 104; 204) extending in a second transverse direction which is substantially perpendicular to the first transverse direction, the second branch (4; 104; 204) thus being intended to be substantially vertical and arranged above the first branch (2; 102; 202),
- the first branch (2; 102; 202) having:
support means (6; 116; 206) which are intended to cooperate with at least one warp wire (40, 40') of each cable tray portion (38), and
at least two lateral stops (17; 110; 254),
- the second branch (4; 104; 204) having:
support means (26; 126; 258) which are intended to cooperate with at least one warp wire (40') of each cable tray portion (38), and
at least two lateral stops (31; 131; 252),
longitudinal spacing means (16, 48; 119; 250), which are arranged between the lateral stops (17; 110; 254) and make it possible to separate two end weft wires (42), being provided on at least one of the branches (2, 4; 102, 104; 202, 204), **characterized in that** the two branches are interconnected by a resilient hinge region having a substantially longitudinal axis, and the second branch (4; 104; 204) has at least one boss extending substantially horizontally.

2. Connecting splice member according to claim 1, **characterized in that** the support means of the first branch comprise a third branch (6; 206) which is symmetrical to the second branch (2; 202) such that the splice member is generally U-shaped, the bottom of the U being formed by the first branch (2; 202) of the splice member and the branches of the U being formed by the second branch (4; 204) and by the third branch (6; 206) of the splice member.

3. Connecting splice member according to either claim 1 or claim 2, **characterized in that** it is produced by cutting and bending a metal sheet.

4. Connecting splice member according to claim 3, **characterized in that** the first branch (2; 102) has:
- a base (8; 108) forming a substantially planar surface in the shape of an elongated rectangle,
- lateral flanks (10; 110) extending substantially perpendicularly to the base from the longitudinal edges thereof,
- tongues (119) cut out of the base and bent in such a way as to be located on the same side of the base as the lateral flanks and at an equal distance from said lateral flanks.

5. Connecting splice member according to either claim 3 or claim 4, **characterized in that** the second branch (4; 104) is produced from an elongate rectangular metal sheet part in which two transverse cuts (30; 130) are made in order to form three strips of material in the central portion of the rectangular part, **in that** a longitudinal edge of the rectangular part is connected to the first branch by the hinge region, **in that** the other longitudinal edge is bent in such a way as to form a first longitudinal gutter (28; 128) on the side opposite the hinge region, and **in that** the three strips of material are all bent in a similar manner, forming a second gutter which is parallel to the first, but the concavity of which is oriented in the opposite direction to the concavity of said first gutter (28; 128).

6. Connecting splice member according to either claim 1 or claim 2, **characterized in that** it is produced from bent and welded wires.

7. Splice member according to claim 6, **characterized in that** it comprises a first transverse wire (250) which is intended to extend between two end weft wires (42), **in that** the first branch (202) comprises at least one second wire (254) which is bent in a U shape and is welded in straddling position on the first transverse wire (250), **in that** the first transverse wire (250) supports at each end thereof a wire (252) in the shape of a stirrup comprising a base (258) and two arms (260), **in that** the base (258) of each stirrup is welded to a free end of the first transverse wire (250), and **in that** each arm (260) of the stirrup (252) extends substantially parallel to the first transverse wire (250), forming a bend, the concavity of which is intended to be oriented towards the inside of the cable tray.

8. Assembly formed by a cable tray portion and at least one splice member, **characterized in that** each splice member is a splice member according to any of claims 1 to 7.

9. Assembly according to claim 8, **characterized in that** the wire cable tray portion comprises firstly longitudinal warp wires (40, 40') and secondly transverse weft wires (42) so as to define a gutter having a bottom delimited by two side walls, and **in that** each splice member is mounted on the cable tray portion (38) such that it straddles a weft wire (42).

10. Assembly according to claim 9, **characterized in that** the weft wire (42) is an end weft wire.
